# FASCICULE DE BREVET EUROPEEN

(11) **EP 0 785 131 B1**
(45) Date de publication et mention de la délivrance du brevet: **12.09.2001**
(21) Numéro de dépôt: 97400068.9
(22) Date de dépôt: 15.01.1997
(51) Int. Cl.: B64F 1/30, B65G 69/00

(54) **Soufflet et passerelle d'accès**
Faltenbalg für Übergangseinrichtungen
Flexible connection for walkway

(30) Priorité: 19.01.1996 FR 9600607
(43) Date de publication de la demande: 23.07.1997
(73) Titulaire: LE JOINT FRANCAIS, Société en Nom Collectif, F-75008 Paris (FR)
(72) Inventeur: Petit, Jean-Claude, 59420 Mouvaux (FR)
(74) Mandataire: Hurwic, Aleksander

(56) Documents cités:
- EP-A- 0 205 314
- EP-A- 0 567 441
- FR-A- 2 407 089
- US-A- 3 816 867
- US-A- 3 834 752

## Description

L'invention se réfère à un soufflet pour passerelle, notamment pour embarquement/débarquement de passagers d'un avion et à une passerelle comportant un tel soufflet.

On sait que les passerelles d'embarquement et/ou débarquement des passagers d'un avion comportent à une extrémité de la passerelle proprement dite un soufflet en accordéon destiné à être appliqué sur le fuselage de l'avion, de part et d'autre d'une porte de l'appareil, pour assurer la protection des passagers qui y entrent ou qui en sortent à l'encontre des intempéries. Des soufflets pour de telles passerelles sont décrits, par exemple, dans NL-A-84 00266, DE-3 023 885, FR-A-2 419 860, FR-A-2 521 950 ou FR-A-2 525 556. Dans les dispositifs que décrivent ces documents, certains font appel pour déployer et refermer le soufflet à des treuils à câbles ou à sangles (NL-A-8400266 ou FR-A-2 521 950) tandis que d'autres sont actionnés à partir de vérins hydrauliques auxquels sont associés des ressorts à gaz (FR-A-2 525 556). L'utilisation de treuils à câbles ou à sangles n'est pas, cependant, à l'abri de difficultés liées à la tension des câbles ou au fait que ceux-ci peuvent être emmêlés, tandis que les dispositifs à vérins hydrauliques et ressorts à gaz peuvent être sujets à des fuites, d'une part et, d'autre part, appliquent avec un effort irrégulier le boudin d'étanchéité que comporte le soufflet sur la carlingue de l'avion.

FR-A-2 672 267 décrit un soufflet de protection contre les intempéries comportant deux mécanismes d'actionnement indépendants, chacun comportant un compas comprenant une tête attelée sur une tige d'un vérin dont le corps est d'inclinaison réglable sur le cadre de la passerelle.

D'autre part, le document US-A-4 333 195 décrit un soufflet pour passerelle d'embarquement et/ou débarquement de passagers d'un avion destiné à se déployer sous l'action de ressorts lors d'un incendie et à entourer un soufflet de protection contre les intempéries. Le mécanisme de déploiement de ce soufflet comporte des compas dont les branches sont articulées sur le cadre. Etant dépourvu de moyens moteurs, le soufflet du document US-A-4 333 195 n'est pas utilisable en tant que soufflet de protection contre les intempéries devant être manoeuvré fréquemment.

Les dispositifs d'actionnement de type connu sont complexes et par suite difficiles à fabriquer et à maintenir en parfait état de fonctionnement.

Il est par exemple connu par le document EP-A-0 205 314 un soufflet de protection du type énoncé dans le préambule de la revendication 1. Dans un tel soufflet, des boudins annulaires s'étendent sur tout le pourtour du tunnel et sont donc d'un encombrement et d'un coût élevés.

La présente invention a par conséquent pour but de remédier à cet inconvénient et de fournir un dispositif d'actionnement permettant d'adapter un soufflet pour passerelle d'embarquement et/ou débarquement des passagers ou des marchandises d'un avion, d'un navire ou véhicule à la forme des différents appareils des flottes existantes.

C'est, encore, un but de l'invention de fournir un tel soufflet et/ou son dispositif d'actionnement propres à équiper d'origine une passerelle, notamment d'accès aux avions d'une aérogare, ou encore propres à être substitués à une partie d'un ensemble déjà installé.

C'est, aussi, un but de l'invention de fournir un tel soufflet et son mécanisme d'actionnement qui assurent une bonne étanchéité du bourrelet d'extrémité du soufflet contre la carlingue de l'appareil avec lequel il doit coopérer.

Ces buts sont atteints par un soufflet de protection contre les intempéries pour passerelle d'embarquement/débarquement/transfert des passagers et/ou des marchandises d'un quai ou véhicule comportant une enveloppe souple formant tunnel, un bourrelet élastique et un dispositif d'actionnement assurant le déploiement du soufflet avec application du bourrelet autour d'une porte d'accès sur la carlingue d'un véhicule, le dispositif d'actionnement comportant des chambres gonflables indépendantes de l'enveloppe et solidarisées avec cette enveloppe assurant sur commande le déploiement du soufflet, caractérisé en ce qu'au moins deux dispositifs d'actionnement pneumatique sont disposés symétriquement par rapport à un plan médian longitudinal du soufflet, chaque dispositif d'actionnement pneumatique comportant une rangée de chambres gonflables en forme de boudins allongés transversalement dont la longueur est faible par rapport à la largeur du soufflet.

Selon des modes de réalisation particuliers :
- les chambres gonflables sont solidarisées avec la face externe de l'enveloppe formant tunnel, de manière à ne pas empiéter sur l'espace interne du soufflet ;
- les chambres gonflables sont disposées sur le toit du soufflet ;
- des armatures de renforcement sont prévues, deux armatures de renforcement successives étant reliées au niveau de chaque dispositif d'actionnement pneumatique par deux boudins de faible section ;
- une alimentation en air comprimé des chambres gonflables est prévue ainsi que des moyens de limitation de la pression dans les chambres gonflables assurant la limitation à une valeur de consigne de la force d'appui du bourrelet sur la carlingue de l'avion ;
- des moyens de rappel vers la condition repliée sont prévus comprenant des contrepoids reliés par des sangles lu des câbles du bourrelet ;
- un cadre comportant des montants tubulaires de fixation sur une passerelle est prévu, les contrepoids du dispositif de rappel étant montés à translation dans lesdits montants tubulaires.

L'invention a également pour objet une passerelle d'embarquement et/ou de débarquement de passagers ou de marchandises, caractérisée en ce qu'elle comporte un soufflet selon l'invention.

L'invention sera bien comprise par la description qui suit, faite à titre d'exemple et en référence au dessin annexé, dans lequel :
- la figure 1 est une vue en coupe longitudinale I-I de l'exemple préféré de réalisation d'un soufflet comportant un dispositif d'actionnement selon la présente invention ;
- la figure 2 est une vue en coupe à plus grande échelle de deux chambres gonflables mises en oeuvre dans le dispositif d'actionnement de la figure 1 ;
- la figure 3 est une vue de face à partir de l'extérieur d'une passerelle équipée d'un soufflet selon la présente invention.

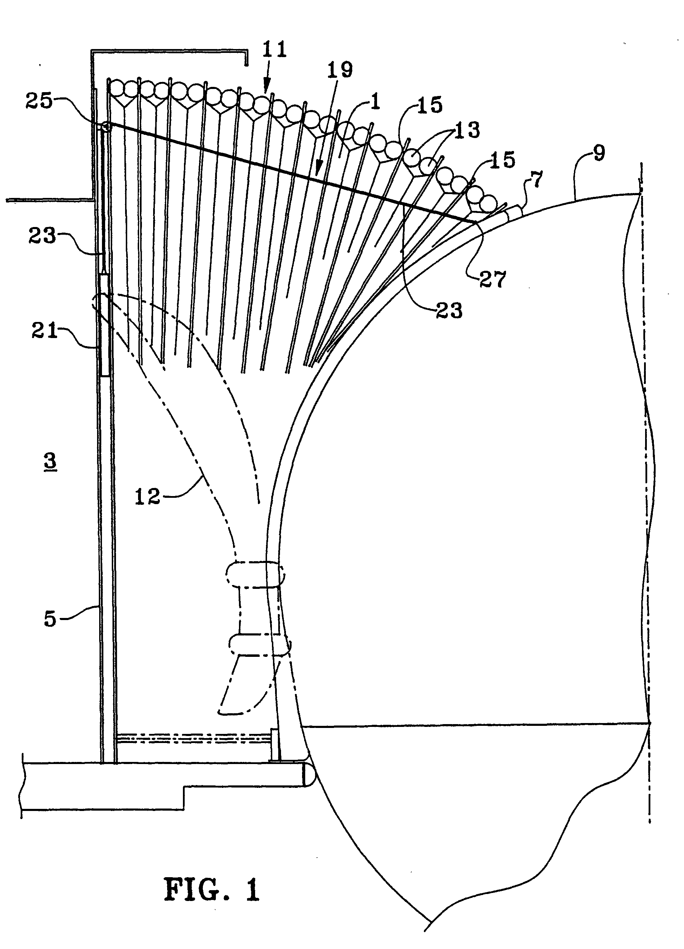

Sur les figures 1 à 3, on a utilisé les mêmes références pour désigner les mêmes éléments.

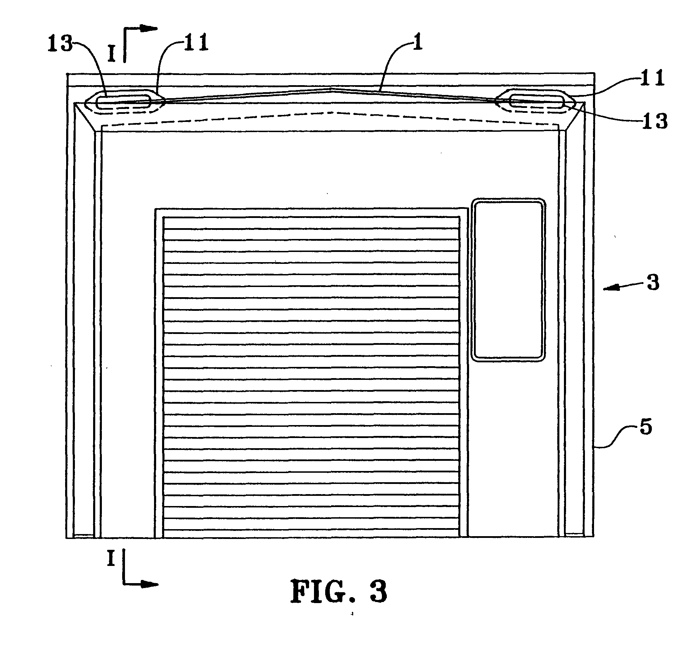

Sur la figure 1, on peut voir un soufflet 1 constitué à la manière d'un soufflet d'accordéon, formant la partie avant d'une passerelle rigide 3 dont l'extrémité est visible sur la figure 3. L'extrémité arrière du soufflet 1 pénètre légèrement dans le tunnel de la passerelle et est fixée à cette dernière sur un cadre périphérique 5. Le soufflet qui, de façon en soi connu et réalisé en tissu caoutchouté ou analogue, est muni à son extrémité avant d'un bourrelet d'étanchéité 7 désigné dans la technique sous son nom anglais "bumper" ou de pare-chocs qui est en matériau souple, déformable élastiquement pour ne pas endommager la carlingue 9 de l'avion avec lequel il coopère dans la condition déployée du soufflet 1.

Pour l'embarquement/le débarquement de produits à basse température, typiquement entre 0° C et -30° C, le soufflet peut comporter en outre un isolant thermique non illustré.

Avantageusement, le dispositif d'actionnement pneumatique 11 comporte des chambres gonflables à basse pression, par exemple comprise entre 0,06 MPa et 0,15 MPa, à enveloppe caoutchouc ou autre. Dans l'exemple préféré de réalisation, les chambres 13 sont disposées à l'extérieur du tunnel formé par le soufflet 1, de manière à ne pas empiéter sur l'espace permettant l'embarquement et le débarquement de passagers, ainsi que la manoeuvre de la porte 12 de l'avion. Toutefois, il est bien entendu que la mise en oeuvre du dispositif 11 d'actionnement pneumatique comportant des chambres 13 internes au soufflet 1 ou empiétant sur son espace interne ne sort pas du cadre de la présente invention. De manière avantageuse, les chambres 13 sont disposées entre des armatures de renfort 15 du soufflet 1. Avantageusement, les chambres gonflables comportent une succession de boudins allongés disposés transversalement par rapport au tunnel formé par le soufflet 1 dans la condition déployée.

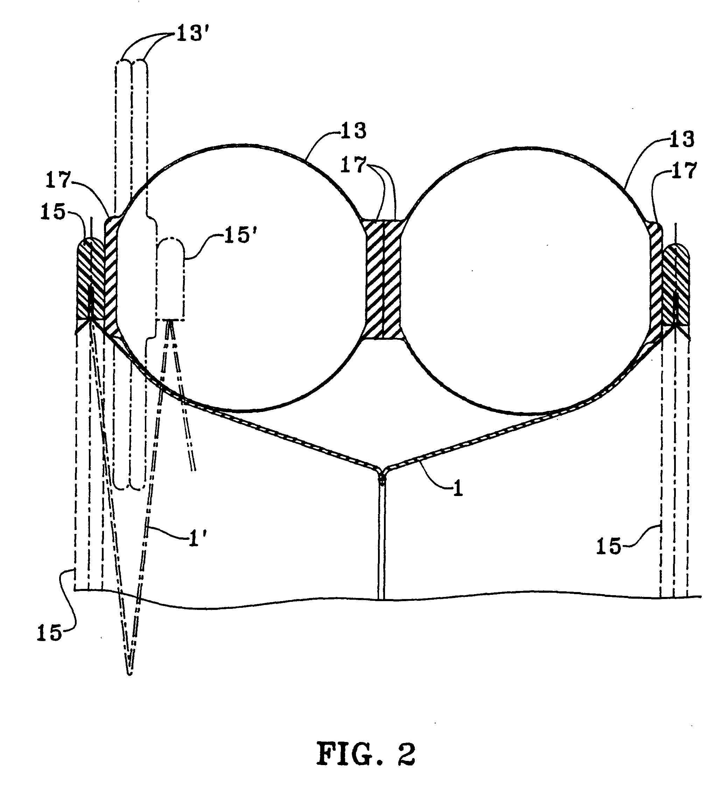

Dans l'exemple préféré illustré sur la figure 2, entre deux armatures de renforcement 15, on a disposé deux boudins chacun ayant, dans la condition déployée du soufflet, une section sensiblement circulaire munie de deux talons de fixation 17 pleins de section rectangulaire. Un premier talon 17 de chaque boudin 13 assure la solidarisation avec l'extrémité de l'armature de renforcement 15 du soufflet 1, le talon opposé servant à l'assemblage avec le talon en vis-à-vis du boudin adjacent. Dans la condition repliée du soufflet 1' illustré en fantôme sur la figure 2, les boudins 13' sont aplatis permettant le rapprochement des armatures de renforcement successives 15'. L'application de soufflets courts et moyens s'effectue par deux dispositifs d'actionnement pneumatique 11, chacun comportant des boudins 13 allongés dont la longueur est faible par rapport à la largeur du soufflet 1 et disposés, comme illustré sur la figure 3, symétriquement par rapport à un plan médian longitudinal du soufflet sur le toit de celui-ci. Avantageusement, les chambres 13 des deux dispositifs d'actionnement pneumatique 11 présentent la configuration illustrée sur la figure 2. Chaque boudin 13 a, avantageusement, un diamètre compris entre 70 et 120 mm et une longueur comprise entre 150 et 300 mm. La mise en oeuvre des moyens de commande indépendante des deux dispositifs 11 d'actionnement pneumatique permet de déployer le soufflet symétriquement par rapport à son axe longitudinal médian pour permettre au bourrelet 7 d'épouser le profil par exemple de la carlingue de l'avion autour d'une porte située dans une partie de cette carlingue 9 présentant une section constante aussi bien que d'adopter une extension asymétrique du soufflet 1 par rapport à son plan médian longitudinal permettant de s'adapter au profil de la carlingue 9 autour des portes disposées dans les régions dans lesquelles le diamètre de la carlingue 9 varie, notamment à l'avant ou à l'arrière d'un avion ou d'un autre véhicule.

Dans une variante à cet exemple, le système de manoeuvre pneumatique est constitué d'une pièce multichambre venant se fixer entre les armatures 15 du soufflet 1, dans le cas d'ouverture supérieure à 240 mm entre deux ondes.

Pour les soufflets de grande longueur, par exemple supérieure à 5 m, il peut s'avérer avantageux de munir le soufflet 1 d'un ou plusieurs dispositifs 11 d'actionnement pneumatique supplémentaires disposés parallèlement au dispositif 11 illustré sur la figure 3.

Le soufflet 1 selon la présente invention est avantageusement muni de moyens 19 de rappel vers la condition repliée. Dans l'exemple avantageux illustré sur la figure 1, les moyens 19 de rappel comportent, de chaque côté du soufflet 1, un contrepoids 21 avantageusement logé dans un cadre 5 creux, par exemple tubulaire, relié par une sangle ou câble 23 passant sur une poulie 25 à des moyens d'ancrage 27 disposés sur le bourrelet 7. Avantageusement, la poulie 25 est réalisée en métal, notamment en laiton, ou en matière plastique, notamment en matière plastique vendue par la Société DUPONT DE NEMOURS sous la marque NYLON. La poulie est avantageusement munie d'un système anti-dérailleur du câble 23 et le cadre 5 comporte une trappe d'accès permettant l'inspection ou la maintenance éventuelle du contrepoids 21. Avantageusement, le contrepoids 21 comporte un gainage présentant un faible coefficient de frottement, par exemple en polyéthylène, pour lui permettre de coulisser sans bruit dans les montants du cadre 5.

La masse des contrepoids 21 est suffisante pour que leur poids, en l'absence de pression dans les chambres 13, assure le repliement du soufflet 1 avec dégonflement des chambres 13 sans pour autant empêcher le déploiement du soufflet 1 lors de l'application de la pression de service.

Le dispositif selon la présente invention comporte en outre une source de fluide sous pression, par exemple d'air comprimé, reliée par une canalisation, de préférence à un détendeur associé à chaque dispositif 11 d'actionnement pneumatique. Avantageusement, ce limiteur de pression assure la limitation de l'effort d'application du bourrelet 7 sur la carlingue 9, notamment d'un avion.

Le fonctionnement du dispositif selon l'invention résulte immédiatement de ce qui précède.

Dans la condition de repos, le soufflet 1 étant replié du côté de la passerelle 3, les chambres 13 sans pression sont aplaties et les armatures de renforcement 15 sont relativement proches les unes des autres, définissant un angle au sommet de faible valeur.

Lorsque le soufflet 1 doit être amené, par exemple au contact de la carlingue 9 de l'avion, un opérateur active un dispositif de commande de sortie, par exemple, il enfonce sur un pupitre de commande de la passerelle un bouton *sortie* assurant l'alimentation en fluide sous pression des dispositifs 11 d'actionnement pneumatique comportant les chambres 13 qui gonflent et font ressortir alors simultanément les deux côtés du soufflet provoquant le déploiement de l'ensemble, comme illustré sur la figure 2, c'est-à-dire, avec un angle d'ouverture au sommet relativement important jusqu'à l'établissement du contact entre le bourrelet 7 et la carlingue 9 de l'avion.

Dès que le bourrelet 7 associé à une des faces latérales du soufflet 1 est au contact de l'appareil, un limiteur de pression ou pressostat associé à la distribution d'air sous pression arrête l'alimentation en air et le système s'arrête, l'autre côté latéral du soufflet continuant sa course jusqu'à ce qu'elle vienne elle-même au contact de ladite carlingue. L'appui sur le bouton *sortie* est alors relâché et le soufflet 1 est immobilisé sur l'appareil avec le bourrelet 7 dans la position illustrée sur la figure 2. Le maintien en position déployée du soufflet 1 est obtenu par le maintien de la pression dans les chambres 13 des deux dispositifs 11 d'actionnement pneumatique. Le repliement du soufflet 1 est obtenu par la libération de la pression des chambres 13 des dispositifs 11 d'actionnement pneumatique, par exemple à l'aide d'un bouton de commande *rentrée* sur le pupitre de commande de la passerelle. Les chambres 13 reliées à la pression atmosphérique ne s'opposent pas à l'action des contrepoids 21 qui ramènent le soufflet 1 vers la condition repliée (vers la gauche sur la figure 2).

Cet ensemble ainsi décrit peut être réalisé sous forme d'un élément autonome propre à être associé à toute passerelle d'accès à un avion, indépendamment de la structure de cette dernière, de sorte qu'il peut équiper une telle passerelle lors de sa fabrication, ou être prévu en remplacement d'un dispositif existant.

De même, le soufflet selon l'invention peut équiper des dispositifs habituellement dépourvus de soufflet comme par exemple les quais de déchargement de camions ou de wagons, notamment frigorifiques.

Le dispositif selon la présente invention dépourvu d'éléments mécaniques présente une très grande fiabilité et un entretien extrêmement simple. En cas de nécessité, le montage et le remontage des dispositifs 11 d'actionnement pneumatique et notamment des chambres 13 sont extrêmement rapides. Les dispositifs 11 d'actionnement pneumatique de l'exemple préféré de réalisation du dispositif selon la présente invention n'empiètent pas sur l'espace intérieur utile du soufflet et ne risque pas de gêner les manoeuvres de la porte de l'avion. De plus, le système présente l'avantage d'exercer un effort constant et régulier sur la carlingue 9 notamment de l'avion quel que soit le modèle et la configuration de ce dernier. La présente invention s'applique principalement à la réalisation d'équipements, notamment de soufflets de protection contre les intempéries, pour passerelle d'embarquement et/ou débarquement des passagers dans les aérogares ou pour embarquement/débarquement et/ou transfert de passagers et/ou de marchandises sur tout type de passerelles, quais ou analogues.

## Revendications

1. Soufflet de protection contre les intempéries pour passerelle (3) d'embarquement/débarquement/transfert des passagers et/ou des marchandises d'un quai ou véhicule comportant une enveloppe souple (1) formant tunnel, un bourrelet élastique (7) et un dispositif d'actionnement (11) assurant le déploiement du soufflet (1) avec application du bourrelet (7) autour d'une porte d'accès sur la carlingue (9) d'un véhicule, le dispositif (11) d'actionnement comportant des chambres gonflables (13) indépendantes de l'enveloppe et solidarisé avec cette enveloppe assurant sur commande le déploiement du soufflet (1), **caractérisé en ce qu'**au moins deux dispositifs (11) d'actionnement pneumatique sont disposés symétriquement par rapport à un plan médian longitudinal du soufflet (1), chaque dispositif (11) d'actionnement pneumatique comportant une rangée de chambres gonflables (13) en forme de boudins allongés transversalement dont la longueur est faible par rapport à la largeur du soufflet.

2. Soufflet selon la revendication 1, **caractérisé en ce que** les chambres gonflables (13) sont solidarisées avec la face externe de l'enveloppe formant tunnel, de manière à ne pas empiéter sur l'espace interne du soufflet (1).

3. Soufflet selon l'une quelconque des revendications précédentes, **caractérisé en ce que** les chambres gonflables (13) sont disposées sur le toit du soufflet (1).

4. Soufflet selon la revendication 1 ou 3, **caractérisé en ce qu'**il comporte des armatures de renforcement (15) et en ce que deux armatures de renforcement successives sont reliées au niveau de chaque dispositif (11) d'actionnement pneumatique par deux boudins (13) de faible section.

5. Soufflet selon l'une quelconque des revendications précédentes, **caractérisé en ce qu'**il comporte une alimentation en air comprimé des chambres gonflables (13) ainsi que des moyens de limitation de la pression dans les chambres gonflables assurant la limitation à une valeur de consigne de la force d'appui du bourrelet (7) sur la carlingue (9) du véhicule.

6. Soufflet selon l'une quelconque des revendications précédentes, **caractérisé en ce qu'**il comporte des moyens de rappel (19) vers la condition repliée comprenant des contrepoids (21) reliés par des sangles ou des câbles (23) au bourrelet (7).

7. Soufflet selon la revendication 6, **caractérisé en ce qu'**il comporte un cadre (5) comportant des montants tubulaires de fixation sur une passerelle (3), les contrepoids (21) du dispositif de rappel (19) étant montés à translation dans lesdits montants tubulaires.

8. Passerelle d'embarquement et/ou de débarquement de passagers d'un avion, **caractérisée en ce qu'**elle comporte un soufflet (1) selon l'une quelconque des revendications précédentes.

## Claims

1. Gangway bellows offering protection against inclement weather and for a loading/unloading/passenger transfer and/or goods movement gangway (3) from a platform or vehicle comprising a flexible casing (1) forming a tunnel, a flexible bead (7) and an actuating device (11) for deploying the gangway bellows (1) with application of the bead (7) around an access door on the cabin (9) of a vehicle, the actuating device (11) comprising inflatable chambers (13) independent of the casing and fixed rigidly to this casing providing deployment of the gangway bellows (1) on command, **characterised in that** at least two pneumatic actuating devices (11) are disposed symmetrically in relation to a longitudinal median plane of the gangway bellows (1), each pneumatic actuating device (11) comprising a row of inflatable chambers (13) in the form of transversely elongated tubes the length of which is small in relation to the width of the gangway bellows (1).

2. A gangway bellows according to claim 1, **characterised in that** the inflatable chambers (13) are fixed rigidly to the outer surface of the tunnel-forming casing in such a way that they do not impinge on the space inside the gangway bellows (1).

3. A gangway bellows according to any one of the preceding claims, **characterised in that** the inflatable chambers (13) are disposed on the roof of the gangway bellows (1).

4. A gangway bellows according to claim 1 or 3, **characterised in that** it comprises reinforcing frames (15) and in that two successive reinforcing frames are connected at the level of each pneumatic actuating device (11) by two tubes (13) of small cross-section.

5. A gangway bellows according to any one of the preceding claims, **characterised in that** it comprises a supply of compressed air for the inflatable chambers (13) and means of limiting the pressure in the inflatable chambers, so restricting to a preset value the force which the tube (7) applies to the cabin (9) of the vehicle.

6. A gangway bellows according to any one of the preceding claims, **characterised in that** it comprises means (19) for restoring the folded condition comprising counterweights (21) connected to the tube (7) by straps or cables (23).

7. A gangway bellows according to claim 6, **characterised in that** it comprises a frame (5) comprising tubular uprights for fixing on a gangway (3), the counterweights (21) of the restoring means (19) being mounted for translatory movement in the said tubular uprights.

8. A gangway for embarking and/or disembarking passengers from an aircraft, **characterised in that** it comprises a gangway bellows (1) according to any one of the preceding claims.

## Patentansprüche

1. Balgen zum Schutz gegenüber den Witterungsunbilden für einen Laufsteg (3) zum An-Bord-Gehen/zum Von-Bord-Gehen/zur Überführung von Passagieren und/oder Waren von einer Hafenmauer, einem Bahnsteig oder einem Flugsteig oder von einem Fahrzeug, mit einer weichen Umhüllung (1), die einen Tunnel bildet, einem elastischen Anlagewulst (7) und einer Betätigungsvorrichtung (11), die das Ausfahren des Balgens (1) mit der Anlage des Wulstes (7) rund um eine Zugangstür am Besatzungsraum (9) eines Fahrzeugs sicherstellt, wobei die Betätigungsvorrichtung (11) aufpumpbare Kammern (13) aufweist, die von der Umhüllung unabhängig sind und mit dieser Umhüllung fest verbindbar sind, um däs Ausfahren des Balgens (1) auf eine Betätigung hin sicherzustellen, **dadurch gekennzeichnet**, daß mindestens zwei Vorrichtungen (11) zur pneumatischen Betätigung in Bezug auf eine Längsmittelebene des Balgens (1) symmetrisch angeordnet sind, wobei jede Vorrichtung (11) zur pneumatischen Betätigung eine Reihe von in Querrichtung angeordneten aufpumpbaren Kammern (13) in Form von länglichen Wülsten aufweist, deren Länge in Bezug auf die Breite des Balgens gering ist.

2. Balgen nach Anspruch 1, **dadurch gekennzeichnet**, daß die aufpumpbaren Kammern (13) fest mit der Außenfläche der Umhüllung verbunden sind, die einen Tunnel bildet, und zwar derart, daß sie nicht in den Innenraum des Balgens (1) eindringen.

3. Balgen nach irgendeinem der vorangehenden Ansprüche, **dadurch gekennzeichnet**, daß die aufpumpbaren Kammern (13) auf dem Dach des Balgens (1) angeordnet sind.

4. Balgen nach Anspruch 1 oder 3, **dadurch gekennzeichnet**, daß er Verstärkungsbewehrungen (15) aufweist, und daß zwei aufeinanderfolgende Verstärkungsbewehrungen auf Höhe einer jeden Vorrichtung (11) zur pneumatischen Betätigung durch zwei Wülste (13) mit geringem Querschnitt verbunden sind.

5. Balgen nach irgendeinem der vorangehenden Ansprüche, **dadurch gekennzeichnet**, daß er eine Drucklufteinspeisung für die aufpumpbaren Kammern (13) sowie Mittel zur Druckbegrenzung in den aufpumpbaren Kammern aufweist, die die Begrenzung auf einen Sollwert für die Anlagekraft des Wulstes (7) am Besatzungsraum (9) des Fahrzeugs sicherstellt.

6. Balgen nach irgendeinem der vorangehenden Ansprüche, **dadurch gekennzeichnet**, daß er Mittel (19) zum Rückstellen in den eingefalteten Zustand aufweist, mit Gegengewichten (21), die durch Riemen oder Seile (23) mit dem Wulst (7) verbunden sind.

7. Balgen nach Anspruch 6, **dadurch gekennzeichnet**, daß er einen Rahmen (5) aufweist, der rohrförmige Streben zur Befestigung auf einem Laufsteg (3) aufweist, wobei die Gegengewichte (21) der Rückstellvorrichtung (19) längsbeweglich in den genannten rohrförmigen Streben angebracht sind.

8. Laufsteg zum An-Bord-Gehen und/oder Von-Bord-Gehen von Passagieren eines Flugzeugs, **dadurch gekennzeichnet**, daß er einen Balgen (1) nach irgendeinem der vorangehenden Ansprüche aufweist.
